(19) **Europäisches Patentamt / European Patent Office / Office européen des brevets**

(11) **EP 1 605 405 B1**

(12) **EUROPÄISCHE PATENTSCHRIFT**

(45) Veröffentlichungstag und Bekanntmachung des Hinweises auf die Patenterteilung:
**26.03.2008   Patentblatt 2008/13**

(51) Int Cl.:
*G06T 7/20* *(2006.01)*

(21) Anmeldenummer: **05011609.4**

(22) Anmeldetag: **30.05.2005**

(54) **Verfahren zur Ermittlung von Bewegungsvektoren, die Bildbereichen eines Bildes zugeordnet sind**

Procedure for the determination of movement vectors

Procédé pour la détermination des vecteurs de mouvement

(84) Benannte Vertragsstaaten:
**DE FR GB IT NL**

(30) Priorität: **01.06.2004   DE 102004026597**

(43) Veröffentlichungstag der Anmeldung:
**14.12.2005   Patentblatt 2005/50**

(73) Patentinhaber: **Micronas GmbH**
**79108 Freiburg i. Br. (DE)**

(72) Erfinder: **Scheffler, Günter**
**80939 München (DE)**

(74) Vertreter: **Patentanwälte**
**Westphal, Mussgnug & Partner**
**Herzog-Wilhelm-Str. 26**
**80331 München (DE)**

(56) Entgegenhaltungen:
**EP-A- 0 466 981         US-A- 5 557 341**
**US-A- 5 790 207**

- **ALPARONE L ET AL: "ADAPTIVELY WEIGHTED VECTOR-MEDIAN FILTERS FOR MOTION-FIELDS SMOOTHING" 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996, IEEE INTERNATIONAL CONFERENCE ON ACOUSTICS, SPEECH, AND SIGNAL PROCESSING - PROCEEDINGS. (ICASSP), NEW YORK, IEEE, US, Bd. VOL. 4 CONF. 21, 7. Mai 1996 (1996-05-07), Seiten 2267-2270, XP000681684 ISBN: 0-7803-3193-1**

**Beschreibung**

Die vorliegende Erfindung betrifft ein Verfahren zur Ermittlung von Bewegungsvektoren, die jeweils einzelnen Bildbereichen in einem Bild zugeordnet sind.

In der Bildverarbeitung ist es bekannt, jeweils einzelnen Bildbereichen eines Bildes, das Teil einer Bildfolge ist, Bewegungsvektoren zuzuordnen. Diese Bewegungsvektoren geben jeweils eine Verschiebung der Position dieses Bildbereiches gegenüber einer Position dieses Bildbereiches in einem vorherigen oder nachfolgenden Bild der Bildfolge an. Nützlich ist die hierdurch erhaltene Bewegungsinformation beispielsweise bei der Erzeugung eines oder mehrerer Zwischenbilder, die zeitlich zwischen den Bildern der Bildfolge liegen, um die Position sich bewegender Objekte in den Zwischenbildern korrekt, d.h. bewegungsrichtig darstellen zu können. Die Bewegungsinformation zu einem sich über mehrere aufeinanderfolgende Bilder bewegenden Objekt oder Bildbereich kann darüber hinaus auch für eine komprimierte Abspeicherung von Bilddaten aufeinanderfolgender Bilder verwendet werden.

Ein mögliches von mehreren Verfahren zur Erzeugung solcher Bewegungsvektoren ist das sogenannte Blockmatching-Verfahren, das beispielsweise in Schröder, H.; Blume, H.: "Mehrdimensionale Signalverarbeitung", Band 2, ISBN 3-519-06197-X, Seite 259-266 beschrieben ist. Bei diesem Verfahren wird das aktuelle Bild einer Bildfolge in eine Anzahl gleich großer Blöcke unterteilt. Zu jedem dieser Blöcke wird dann im vorherigen oder nachfolgenden Bild der Block gesucht, dessen Bildinhalt die größte Übereinstimmung mit dem Inhalt des jeweiligen Blockes des aktuellen Bildes aufweist. Der Verschiebungsvektor zwischen diesem Block des aktuellen Bildes und dem Block des vorherigen oder nachfolgenden Bildes, der die größten Übereinstimmungen mit diesem Block des aktuellen Bildes aufweist, bildet dann den Bewegungsvektor zu diesem Block des aktuellen Bildes.

Beim sogenannten Full-Search-Algorithmus wird hierbei jeder Block des aktuellen Bildes mit jedem Block des vorherigen oder nachfolgenden Bildes verglichen, um die Bewegungsvektoren der einzelnen Bereiche zu ermitteln. Zur Reduzierung des erheblichen Rechenaufwandes, der beim Full-Search-Algorithmus erforderlich ist, sind weiterhin prädiktive Schätzverfahren bekannt, bei denen bei der Ermittlung des Bewegungsvektors zu einem Block Bewegungsinformationen aus vorherigen Bewegungsschätzungen berücksichtigt werden.

Die Qualität der Bewegungsschätzung mittels Blockschätzverfahren ist wesentlich von der Blockauflösung, d.h. der Größe der einzelnen Blöcke abhängig. Die Qualität ist dabei umso größer je kleiner die einzelnen Blöcke sind, je besser die Auflösung des Bildes in einzelnen Blöcken also ist und je mehr Bewegungsvektoren pro Bild somit ermittelt werden. Umgekehrt steigt allerdings auch der Rechenaufwand mit kleiner werdender Blockgröße. Allerdings steigt auch die Fehleranfälligkeit für Schätzfehler bei kleiner werdenden Blockgrößen. Das Optimum der Blockgröße liegt daher bei ca. 4x8 (Zeilen x Pixel). Allerdings entstehen bei Blöcken dieser Größe deutlich erkennbare Blockstrukturen bei der Bildverarbeitung. Bewegt sich beispielsweise ein rundes Objekt in dem Bild vor einem Hintergrund, so kann es durch die Blockschätzung zu erkennbaren Kanten an der Grenze des Objekts zu dem Hintergrund kommen.

Zur Erhöhung der Auflösung bei der Ermittlung von Bewegungsvektoren ist es aus der US 5,148,269 bekannt, das Bild in eine vorgegebene Anzahl von Hauptblöcken zu unterteilen und zunächst eine Blockschätzung durchzuführen, um jedem dieser Hauptblöcke einen Bewegungsvektor zuzuordnen. Jeder einzelne Hauptblock wird dann in eine Anzahl Unterblöcke unterteilt, denen jeweils ein Bewegungsvektor zugeordnet wird. Zur Erzeugung der Bewegungsvektoren der Unterblöcke werden hierbei der Bewegungsvektor des jeweiligen Hauptblockes und die Bewegungsvektoren der benachbart zu dem Hauptblock liegenden weiteren Hauptblöcke herangezogen.

Die Patentschrift US 5,790,207 offenbart ein Verfahren zur Nachbearbeitung von Bewegungsvektorfeldern um Block- bzw. Bewegungsartefakte zu vermeiden. Die einzelnen Blöcke werden dazu in Sub-Blöcke unterteilt und deren Bewegungsvektoren werden als Mittelwert aus den umliegenden Blöcken bestimmt.

Die Patentanmeldung EP 0,466,981 offenbart ein vergleichbares Verfahren, bei dem die Bewegungsvektoren der Sub-Blöcke als Medianwert aus den umliegenden Blöcken ermittelt werden.

Bei dem aus der Patentschrift US 5,557,341 bekannten Verfahren werden die Bewegungsvektoren der Sub-Blöcke durch zeitlich-/örtliche Prädiktion aus den zeitlich und örtlich benachbarten Blöcken berechnet.

Ziel der vorliegenden Erfindung ist es, ein Verfahren zur Ermittlung von Bewegungsvektoren zur Verfügung zu stellen, das eine erhöhte Auflösung bei einem vertretbaren Mehraufwand an Rechenleistung bietet, und das insbesondere geeignet ist, blockartige Strukturen in einem unter Verwendung von Bewegungsvektoren erzeugten Bild zu vermeiden.

Dieses Ziel wird durch ein Verfahren mit den Merkmalen des Anspruchs 1 erreicht. Vorteilhafte Ausgestaltungen des Verfahrens sind Gegenstand der Unteransprüche.

Das Verfahren basiert auf einer Blockschätzung, für welche das Bild in eine Anzahl von rechteckförmigen Bildblöcken unterteilt wurde und durch welche zu jedem dieser Bildblöcke ein Bewegungsvektor ermittelt wurde. Ausgehend von der Unterteilung des Bildes in diese rechteckförmigen Bildblöcke und der Zuordnung von Bewegungsvektoren zu den einzelnen Bildblöcken umfasst das Verfahren folgende Verfahrensschritte:

A) Festlegen eines in einer Ecke eines der Bildblöcke angeordneten Eckbereiches,

B) Ermitteln der zu diesem Eckbereich benachbarten Bildblöcke,

C) Ermitteln, ob die diesen benachbarten Bildblöcken zugeordneten Bewegungsvektoren ein homogenes Vektorfeld bilden,

D) Erzeugen eines Bewegungsvektors zu dem Eckbereich aus den Bewegungsvektoren der benachbarten Bildblöcke, wenn die Bewegungsvektoren der benachbarten Bildblöcke ein homogenes Vektorfeld bilden.

Bei dem Verfahren wird davon ausgegangen, dass dann, wenn die Bewegungsvektoren der zu einer Ecke eines betrachteten Bildblockes benachbarten Bildblöcke ein homogenes Vektorfeld bilden, zumindest auch der Bewegungsvektor dieses Eckbereiches zu diesem homogenen Vektorfeld gehört, so dass dieser Bewegungsvektor des Eckbereiches aus den Bewegungsvektoren dieser benachbarten Bildbereiche erzeugt wird. Wesentlich ist hierbei insbesondere, dass bei Homogenität der Bewegungsvektoren der benachbarten Bildblöcke nur diese Bewegungsvektoren der benachbarten Bildblöcke zur Erzeugung des Bewegungsvektors des Eckbereiches herangezogen werden. Der Bewegungsvektor des Bildblockes, dem der Eckbereich entstammt wird dabei nicht berücksichtigt.

Die Erzeugung eines Bewegungsvektors zu dem Eckbereich umfasst bei einer Ausführungsform eine Mittelung der Bewegungsvektoren der benachbarten Bildblöcke. Die Bewegungsvektoren der benachbarten Bildblöcke können bei der Mittelung gleich gewichtet werden. Alternativ besteht auch die Möglichkeit, die Bewegungsvektoren der zu dem Eckbereich benachbarten Bildblöcke bei der Mittelung unterschiedlich stark zu gewichten. Vorzugsweise wird dabei der Bewegungsvektor des Bildblockes stärker gewichtet, der lediglich mit einer Ecke benachbart zu dem Eckbereich liegt, der sich also in diagonaler Richtung an den betrachteten Bildblock anschließt.

Sofern die Bewegungsvektoren der zu dem Eckbereich benachbarten Bildbereiche kein homogenes Vektorfeld bilden, ist bei einer Ausführungsform des Verfahrens vorgesehen, dem Eckbereich den Bewegungsvektor des betrachteten Bildblockes als Bewegungsvektor zuzuordnen. Das Verfahren bleibt in diesem Fall ohne Auswirkung auf den Bewegungsvektor des Eckbereiches.

Die Festlegung des Eckbereiches kann auf unterschiedliche Weise erfolgen. Die Anzahl und die Anordnung der einen solchen Eckbereich bildenden Bildpunkte eines betrachteten Bildblockes ist insbesondere von der Anzahl der Bildpunkte abhängig, die der Bildblock umfasst.

Bei einer Ausführungsform ist vorgesehen, dass der Eckbereich nur einen in der einen betrachteten Ecke des Bildblockes angeordneten Eckbildpunkt umfasst. Bei einer weiteren Ausführungsform umfasst der Eckbereich ausgehend von dem Eckbildpunkt wenigstens einen in horizontaler Richtung des Bildblockes benachbart zu dem Eckbildpunkt angeordneten Bildpunkt und wenigstens einen in vertikaler Richtung des Bildblockes benachbart zu dem Eckbildpunkt angeordneten Bildpunkt.

Bei dem Verfahren werden vorzugsweise zu allen Ecken des einen Bildblockes Eckbereiche festgelegt und zu jedem dieser Eckbereiche wird ein Bewegungsvektor in der zuvor erläuterten Weise erzeugt. Die einzelnen Eckbereiche sind vorzugsweise so definiert, dass die Eckbereiche benachbarter Ecken aneinander angrenzen.

Neben der Festlegung von Eckbereichen eines betrachteten Bildblockes und dem Erzeugen von Bewegungsvektoren zu diesen Eckbereichen ist bei einer Ausführungsform zusätzlich vorgesehen, einen in der Mitte des betrachteten Bildblocks angeordneten Mittenbereich festzulegen, zu ermitteln, ob die Bewegungsvektoren von wenigstens fünf der zu dem betrachteten Bildblock benachbarten Bildblöcke ein homogenes Vektorfeld bilden, und einen Bewegungsvektor zu dem Mittenbereich aus den Bewegungsvektoren der wenigstens fünf benachbarten Bildblöcke zu erzeugen, wenn die Bewegungsvektoren dieser wenigstens fünf benachbarten Bildblöcke ein homogenes Vektorfeld bilden.

Sowohl für die Erzeugung eines Bewegungsvektors zu einem Eckbereich als auch für die Erzeugung eines Bewegungsvektors zu einem Mittenbereich wird das Vorliegen eines homogenen Vektorfeldes angenommen, wenn die Beträge von Differenzvektoren, die aus der Vektordifferenz der Bewegungsvektoren der benachbarten Bildblöcke gebildet sind, kleiner als ein vorgegebener Schwellenwert sind.

Die vorliegende Erfindung wird nachfolgend in Ausführungsbeispielen anhand von Figuren näher erläutert.

Figur 1    zeigt einen Bildausschnitt mit mehreren benachbart angeordneten Bildblöcken zur Erläuterung des erfindungsgemäßen Verfahrens, bei dem zu einem ersten Eckbereich eines betrachteten Bildblockes ein Bewegungsvektor erzeugt wird.

Figur 2    zeigt den Bildausschnitt gemäß Figur 1 zur Erläuterung der Erzeugung von Bewegungsvektoren zu weiteren Eckbereichen des betrachteten Bildblockes.

Figur 3    zeigt den Bildausschnitt gemäß der Figuren 1 und 2 zur Erläuterung der Erzeugung eines Bewegungsvektors zu einem Mittenbereich des betrachteten Bildblockes.

Figur 4   veranschaulicht eine mögliche Unterteilung eines 4 x 8 Bildpunkte umfassenden Bildblockes.

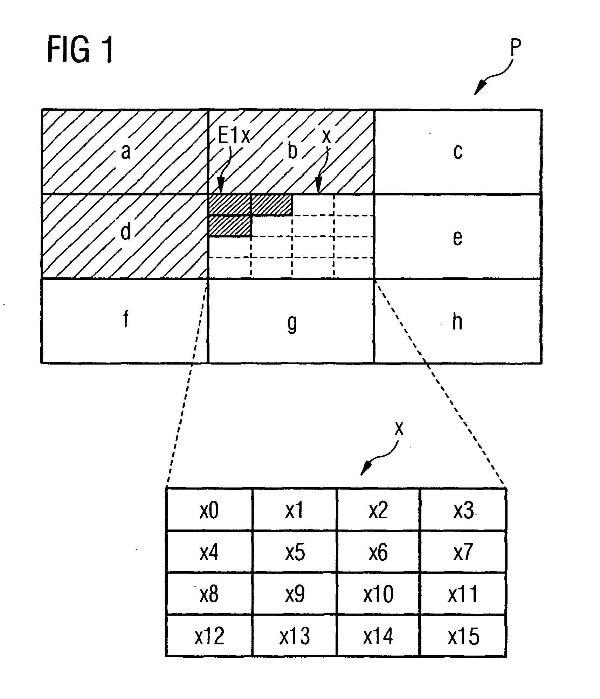

Figur 1 zeigt schematisch einen Ausschnitt eines Bildes P einer Bildfolge, wobei diese Bildfolge in nicht näher dargestellter Weise zeitlich aufeinanderfolgend eine Anzahl jeweils gleichartig aufgebauter Bilder umfasst. Das Bild P ist beispielsweise ein Bild aus einer Folge von Fernseh- oder Videobildern.

Das Bild ist in jeweils gleich große rechteckförmige Bildblöcke a-h, x unterteilt, von denen in dem Ausschnitt gemäß Figur 1 neun Bildblöcke dargestellt sind. Von den dargestellten Bildblöcken a-h, x sind drei in horizontaler Richtung nebeneinander liegend und drei in vertikaler Richtung nebeneinander liegend angeordnet sind.

Jedem dieser Bildblöcke a-h, x ist ein in der Figur nicht näher dargestellter Bewegungsvektor zugeordnet. Die Ermittlung solcher Bewegungsvektoren zu den einzelnen Bildblöcken kann mittels herkömmlicher, hinlänglich bekannter Blockschätzverfahren durchgeführt werden, die beispielsweise in Schröder, H.; Blume, H.; a.a.O., Seiten 259 ff. beschrieben sind.

Das erfindungsgemäße Verfahren basiert auf einer Unterteilung des Bildes P in einzelne Bildblöcke, denen jeweils ein Bewegungsvektor zugeordnet ist.

Von den in dem Ausschnitt in Figur 1 dargestellten Bildblöcken a-h, x sei im Folgenden der Bildblock x näher betrachtet, zu dem die übrigen in Figur 1 dargestellten Bildblöcke a-h jeweils benachbart angeordnet sind. Ohne Beschränkung der Allgemeinheit wird für die nachfolgende Erläuterung davon ausgegangen, dass die einzelnen Bildblöcke jeweils 16 Bildpunkte umfassen, die in einer Bildpunktmatrix mit vier Zeilen von je vier Bildpunkten angeordnet sind. Diese 4 x 4 Bildpunkte sind zu Zwecken der nachfolgenden Erläuterung mit x0 bis x15 durchnummeriert, wie in dem in Figur 1 vergrößerten Ausschnitt des Bildblockes x gezeigt ist.

Bezug nehmend auf Figur 1 wird bei dem erfindungsgemäßen Verfahren in dem betrachteten Bildblock x in einer Ecke, in dem Beispiel in der linken oberen Ecke des Bildblockes x, ein Eckbereich E1x festgelegt. Dieser Eckbereich umfasst in dem Ausführungsbeispiel den in der linken oberen Ecke angeordneten Eckbildpunkt x0, den in horizontaler Richtung neben diesem Eckbildpunkt angeordneten Bildpunkt x1 sowie den in vertikaler Richtung zu dem Eckbildpunkt x0 benachbart angeordneten Bildpunkt x4. Der Eckbereich E1x ist in Figur 1 schraffiert dargestellt. Benachbart zu diesem Eckbereich E1x liegen die Bildblöcke a, b, d, also der in vertikaler Richtung oberhalb des betrachteten Bildblockes x liegende Bildblock b, der in horizontaler Richtung links neben dem betrachteten Bildblock x liegende Bildblock d sowie der diagonal links oberhalb des betrachteten Bildblockes x angeordnete Bildblock a.

Um zu dem Eckbereich E1x einen Bewegungsvektor V1x zu erzeugen, wird zunächst untersucht, ob die Bewegungsvektoren Va, Vb, Vd der zu dem Eckbereich E1x benachbarten Bildblöcke a, b, d ein homogenes Vektorfeld bilden. Ein solches homogenes Vektorfeld liegt dann vor, wenn die Beträge der Differenzvektoren, die aus jeweils zwei dieser Bewegungsvektoren Va, Vb, Vd gebildet sind, kleiner sind als ein vorgegebener Schwellenwert. Ein homogenes Vektorfeld liegt also dann vor, wenn gilt:

$$|Va - Vb| \; < \; \Delta_{\mathbf{max}} \qquad\qquad (1a)$$

$$|Va - Vd| \; < \; \Delta_{\mathbf{max}} \qquad\qquad (1b)$$

$$|Vb - Vd| \; < \; \Delta_{\mathbf{max}} \qquad\qquad (1c)$$

|.| steht dabei für die Beträge der einzelnen Differenzvektoren, wobei die Differenzvektoren in hinlänglich bekannter Weise durch Bilden der Differenzen der Vektorkomponenten gebildet werden.

Der Schwellenwert $\Delta_{max}$ kann dabei fest vorgegeben werden oder kann abhängig von den Beträgen der Bewegungsvektoren ermittelt werden. So besteht die Möglichkeit, die Beträge der betrachteten Bewegungsvektoren Va, Vb, Vd zu ermitteln, den Mittelwert dieser Beträge zu bilden und den Schwellenwert $\Delta_{max}$ so zu wählen, dass er kleiner als ein vorgegebener Anteil dieses Mittelwertes, beispielsweise 10 %, ist.

Bei einem vereinfachten Ausführungsbeispiel wird das Vorliegen eines homogenen Vektorfeldes bereits dann angenommen, wenn nur zwei der oben angegebenen Beziehungen (1a)-(1c) erfüllt sind.

Wird eine solche Homogenität der Bewegungsvektoren Va, Vb, Vd der zu dem Eckbereich E1x benachbarten Bildblöcke a, b, d ermittelt, so wird der Bewegungsvektor V1x des Eckbereiches E1x aus den Bewegungsvektoren Va, Vb, Vd der benachbarten Bildblöcke a, b, d ermittelt.

Der Bewegungsvektor V1x des Eckbereiches E1x ist also eine Funktion der Bewegungsvektoren Va, Vb, Vd der benachbarten Bildblöcke a, b, d, es gilt:

$$Vx = f(Va, Vb, Vd) \qquad (2)$$

Die Funktion f(.) ist beispielsweise eine lineare Mittelung, so dass gilt:

$$V1x = k1 \cdot Va + k2 \cdot Vb + k3 \cdot Vd \qquad (3).$$

Für die Gewichtungsfaktoren k1, k2, k3 gilt dabei:

$$k1 + k2 + k3 = 1 \qquad (4).$$

Die Bewegungsvektoren der zu dem Eckbereich E1x benachbarten Bildblöcke können dabei insbesondere gleichgewichtet werden, so dass k1 = k2 = k3 = 1/3 gilt.

Darüber hinaus besteht auch die Möglichkeit, die Bewegungsvektoren der benachbarten Bildblöcke a, b, d unterschiedlich zu gewichten, wobei insbesondere der Bewegungsvektor Va des diagonal links oberhalb des betrachteten Eckbereiches E1x liegenden Bildblockes a stärker als die Bewegungsvektoren der beiden anderen benachbarten Bildblöcke b, d gewichtet wird. Es gilt dann: k1>k2, k3.

Wesentlich für das vorliegende Verfahren ist, dass bei Vorhandensein eines homogenen Bewegungsvektorfeldes benachbart zu dem Eckbereich E1x der Bewegungsvektor V1x dieses Eckbereiches E1x nur aus den Bewegungsvektoren benachbarter Bildblöcke ermittelt wird. Ein dem Bildblock x zugeordneter Bewegungsvektor Vx wird bei Vorhandensein eines solches homogenen Vektorfeldes für die Ermittlung des Bewegungsvektors V1x des Eckbereiches E1x nicht berücksichtigt.

Bei dem erfindungsgemäßen Verfahren wird davon ausgegangen, dass dann, wenn die Bewegungsvektoren Va, Vb, Vd der zu dem Eckbereich E1x benachbarten Bildblöcke a, b, d ein homogenes Vektorfeld bilden, der Bewegungsvektor des Eckbereiches E1x ebenfalls zu diesem homogenen Vektorfeld gehört, so dass dieser Bewegungsvektor aus den Bewegungsvektoren der benachbarten Bildblöcke gebildet wird. Sofern der dem Bildblock x zugeordnete Bewegungsvektor Vx ebenfalls Teil dieses homogenen Vektorfeldes ist, wird durch das erfindungsgemäße Verfahren dem Eckbereich E1x ein Bewegungsvektor zugeordnet, der sich allenfalls unwesentlich von dem dem Bildblock x zugeordneten Bewegungsvektor Vx unterscheidet. Unterscheidet sich der Bewegungsvektor Vx des Bildblockes x jedoch von den Bewegungsvektoren des homogenen Vektorfeldes, so wird dem Eckbereich E1x ein anderer Bewegungsvektor als dieser dem Bildblock x zugeordnete Bewegungsvektor Vx zugeordnet. In dem unter Verwendung dieser Bewegungsvektoren erzeugten Bild können dadurch ungewollte blockartige Strukturen vermieden werden, die bei einer bloßen Verwendung der den einzelnen Blöcken zugeordneten Bewegungsvektoren vorhanden sein können.

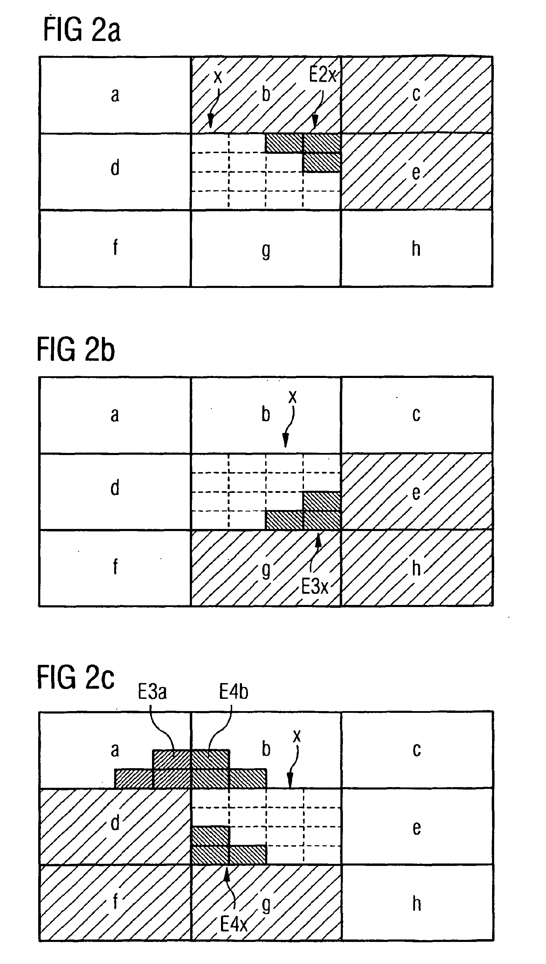

Das erfindungsgemäße Verfahren wird vorzugsweise für Eckbereiche in allen vier Ecken des Bildblockes x durchgeführt. Bezug nehmend auf Figur 2a und den in Figur 1 vergrößerten Ausschnitt wird ein zweiter Eckbereich E2x in einer rechten oberen Ecke des Bildblockes x durch die drei in dieser Ecke angeordneten Bildpunkte x2, x3, x7 gebildet. Benachbart zu diesem zweiten Eckbereich E2x liegen die Bildblöcke b, c, e, deren Bewegungsvektoren Vb, Vc, Ve untersucht und zur Erzeugung eines Bewegungsvektors V2x des Eckbereiches E2x in der oben erläuterten Weise verwendet werden, wenn diese Bewegungsvektoren Vb, Vc, Ve ein homogenes Vektorfeld bilden.

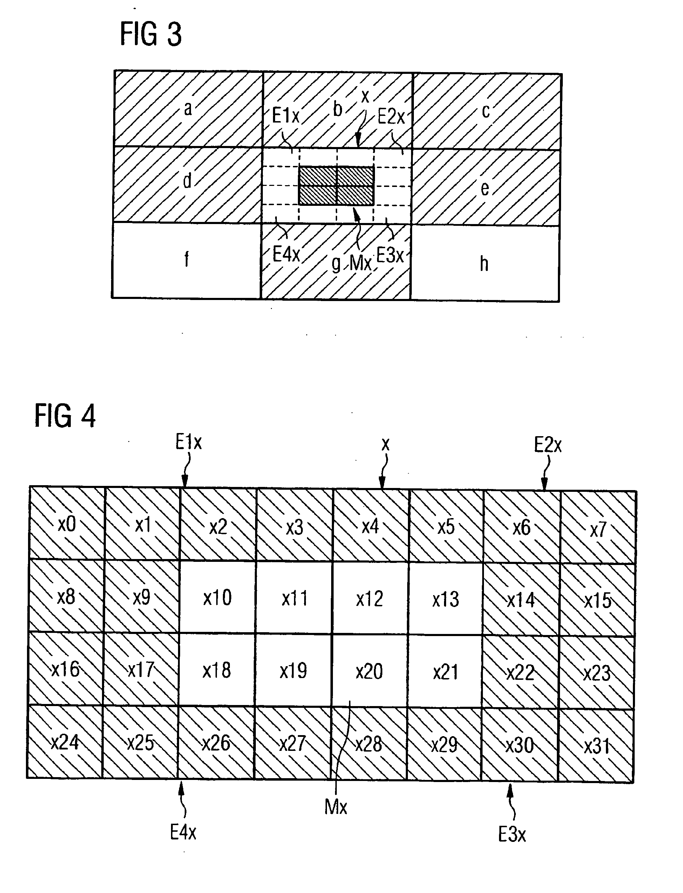

Ein dritter Eckbereich E3x in der rechten unteren Ecke des Bildblockes x wird Bezug nehmend auf Figur 2b und den vergrö-ßerten Ausschnitt in Figur 3 durch die in dieser Ecke angeordneten Bildpunkte x11, x14, x15 gebildet. Benachbart zu diesem dritten Eckbereich E3x liegen die Bildblöcke e, g, h, deren Bewegungsvektoren Ve, Vg, Vh zur Erzeugung eines Bewegungsvektors V3x dieses dritten Eckbereiches E3x herangezogen werden, wenn diese Bewegungsvektoren Ve, Vg, Vh ein im Sinne der obigen Erläuterungen homogenes Vektorfeld bilden.

Ein vierter Eckbereiche E4x in einer linken unteren Ecke des Bildblockes x ist Bezug nehmend auf Figur 2c und den vergrö-ßerten Ausschnitt in Figur 1 durch die in dieser Ecke angeordneten Bildpunkte x8, x12, x13 gebildet. Bei der Erzeugung eines Bewegungsvektors V4x für diesen Eckbereich E4x werden die Bewegungsvektoren Vd, Vf, Vg der zu diesem Eckbereich E4x benachbarten Bildblöcke d, f, g herangezogen, sofern diese Bewegungsvektoren Vd, Vf, Vg ein homogenes Vektorfeld bilden.

Wenn festgestellt wird, dass durch die Bewegungsvektoren der zu einem Eckbereich benachbarten Bildblöcke kein homogenes Vektorfeld gebildet ist, wird dem jeweiligen Eckbereich als Bewegungsvektor der Bewegungsvektor Vx des betrachteten Bildblockes x zugewiesen, bzw. dieser Bewegungsvektor Vx wird beibehalten.

In dem zuvor erläuterten Beispiel sind die Eckbereiche E1x, E2x, E3x, E4x so gewählt, dass die Eckbereiche jeweils benachbarter Ecken des Bildblockes x aneinander anschließen, und dass die Eckbereiche E1x, E2x, E3x, E4x zusammen den Bildblock x nicht vollständig abdecken. Bezug nehmend auf Figur 3 umgeben diese Eckbereiche E1x, E2x, E3x, E4x einen Mittenbereich Mx des Bildblockes x, der durch die vier in der Mitte des Bildblockes x angeordneten Bildpunkte x5, x6, x9, x10, gebildet ist.

Bei der Ermittlung der den einzelnen Bildblöcken zugeordneten Bewegungsvektoren mittels eines Blockschätzverfahrens kann es zu Schätzfehlern kommen, wodurch der Fall auftreten kann, dass dem Bildblock x ein anderer Bewegungsvektor als den zu diesem Bildblock x benachbarten Bildblöcken a-h zugeordnet ist. Um derartige bei der Blockschätzung auftretende Fehler zu eliminieren wird zu dem Mittenbereich Mx ein Bewegungsvektor Vmx aus den Bewegungsvektoren benachbarter Bildblöcke gebildet, wenn festgestellt wird, dass die Bewegungsvektoren dieser zu dem Bildblock x benachbarten Bildblöcke a-h ein homogenes Vektorfeld bilden. Vorzugsweise werden dabei wenigstens fünf der zu dem Bildblock x benachbarten Bildblöcke a-h betrachtet. Wird festgestellt, dass die Bewegungsvektoren dieser betrachteten benachbarten Bildblöcke ein homogenes Vektorfeld bilden, so wird der Bewegungsvektor Vmx des Mittenbereiches Mx aus den Bewegungsvektoren dieser betrachteten benachbarten Bildblöcke unter Verwendung eines der oben genannten Verfahren, also beispielsweise mittels eines Mittelungsverfahrens gebildet.

Die Eckbereiche E1x, E2x, E3x, E4x und der Mittenbereich Mx sind vorzugsweise so aufeinander abgestimmt, dass sie gemeinsam den Bildblock x vollständig ausfüllen, vorzugsweise ohne sich gegenseitig zu überlappen.

Das zuvor anhand des Bildblockes x erläuterte Verfahren wird vorzugsweise für alle Bildblöcke eines Bildes P durchgeführt. Betrachtet man beispielsweise den Bildblock a, so werden zur Ermittlung eines Bewegungsvektors für einen rechten unteren Eckbereich E3a dieses Bildblockes beispielsweise die Bewegungsvektoren der zu diesem Eckbereich E3a benachbarten Bildblöcke b, x, d, herangezogen. Entsprechend werden für die Ermittlung eines Bewegungsvektors zu einem linken unteren Eckbereich E4b des Bildblockes b Bewegungsvektoren der zu diesem Eckbereich E4b benachbarten Bildblöcke a, d, x herangezogen.

Bei dem zuvor anhand der Figuren 1 bis 3 erläuterten Verfahren umfassen die einzelnen Bildblöcke jeweils 4 x 4 Bildpunkte, und die Eckbereiche sind jeweils so gewählt, dass sie drei dieser insgesamt 16 Bildpunkte umfassen.

Es sei darauf hingewiesen, dass die Geometrie dieser Eckbereiche beliebig gewählt werden kann, dass alle Eckbereiche eines betrachteten Bildblockes vorzugsweise diesen Bildblock jedoch nicht vollständig ausfüllen. Bezug nehmend auf das zuvor erläuterte Beispiel besteht auch die Möglichkeit, die Eckbereiche derart zu wählen, dass diese jeweils nur einen einzelnen Bildpunkt, nämlich die in den Ecken angeordneten Bildpunkte x0, x3, x12, x15 umfassen.

Umfassen die einzelnen Bildblöcke mehr als 4 x 4 Bildpunkte, so besteht selbstverständlich auch die Möglichkeit, die Eckbereiche so zu wählen, dass sie mehr als ein oder drei Bildpunkte umfassen.

Diesbezüglich wird auf Figur 4 Bezug genommen, in der ein Bildblock x schematisch dargestellt ist, der 32 Bildpunkte umfasst, die in einer 4 x 8 Matrix mit vier Bildpunktzeilen von je acht Bildpunkten angeordnet sind. Zu Erläuterungszwecken sind diese Bildpunkte zeilenweise von links nach rechts beginnend mit der obersten Bildpunktzeile von x0 bis x31 durchnummeriert.

Bei derartigen Bildblöcken sind die Eckbereiche E1x, E2x, E3x, E4x so gewählt, dass sie jeweils sechs Bildpunkte umfassen. Der in der linken oberen Ecke angeordnete erste Eckbereich E1x umfasst dabei die Bildpunkte x0-x3 und x8, x9 der in der rechten oberen Ecke angeordnete zweite Eckbereich E2x umfasst die Bildpunkte x4-x7 und x14, x15, der in der rechten unteren Ecke angeordnete Eckbereich E3x umfasst die Bildpunkte x22, x23 und x28-x31, und der in der linken unteren Ecke angeordnete vierte Eckbereich E4x umfasst die Bildpunkte x16, x17 und x24-x27.

Ein von diesen Eckbereichen E1x-E4x umgebener Mittenbereich Mx umfasst die Bildpunkte x10-x13 und x18-x21.

Bezugszeichenliste

| a-h | Bildblöcke |
| E1x-E4x | Eckbereiche |
| E3a | Eckbereich |
| E4b | Eckbereich |
| Mx | Mittenbereich |
| P | Bildausschnitt |
| x | Bildblock |
| x0-x31 | Bildpunkte |

**EP 1 605 405 B1**

**Patentansprüche**

1. Verfahren zur Ermittlung von Bewegungsvektoren, die einzelnen Bildbereichen (E1x, E2x, E3x, E4x) eines Bildes (P) zugeordnet sind, wobei das Bild (P) in eine Anzahl von rechteckförmigen Bildblöcken (a-d, x, e-h) unterteilt ist und jedem Bildblock (a-d, x, e-h) ein Bewegungsvektor zugeordnet ist, wobei das Verfahren folgende Verfahrensschritte umfasst:

   A) Festlegen eines in einer Ecke eines (x) der Bildblöcke (a-d, x, e-h) angeordneten Eckbereiches (E1x),
   B) Ermitteln der zu diesem Eckbereich (E1x) benachbarten Bildblöcke (a, b, d),
   C) Ermitteln, ob die diesen benachbarten Bildblöcken (a, b, d) zugeordneten Bewegungsvektoren ein homogenes Vektorfeld bilden,
   D) Erzeugen eines Bewegungsvektors zu dem Eckbereich (E1x) aus den Bewegungsvektoren der benachbarten Bildblöcke (a, b, d), wenn die Bewegungsvektoren der benachbarten Bildblöcke ein homogenes Vektorfeld bilden.

2. Verfahren nach Anspruch 1, das folgenden weiteren Verfahrensschritt aufweist:

   E) Festlegen des Bewegungsvektors des einen der Blöcke (x) als Bewegungsvektor für den Eckbereich, wenn die Bewegungsvektoren der benachbarten Bildblöcke kein homogenes Vektorfeld bilden.

3. Verfahren nach einem der Ansprüche 1 oder 2, bei dem die Erzeugung eines Bewegungsvektors zu dem Eckbereich (E1x) eine Mittelung der Bewegungsvektoren der benachbarten Bildblöcke umfasst.

4. Verfahren nach Anspruch 3, bei dem die Bewegungsvektoren der benachbarten Bildblöcke (a, b, d) bei der Mittelung gleich gewichtet werden.

5. Verfahren nach Anspruch 3, bei dem der Bewegungsvektor des einen (a) der benachbarten Bildblöcke, der lediglich mit einer Ecke benachbart zu dem Eckbereich (E1x) liegt, stärker als die Bewegungsvektoren der anderen zu dem Eckbereich (E1x) benachbarten Bildblöcke (b, d) bei der Mittelung gewichtet wird.

6. Verfahren nach einem der vorangehenden Ansprüche, bei dem der Eckbereich (E1x) einen in der Ecke des einen Bildblockes (x) angeordneten Eckbildpunkt (x0) umfasst.

7. Verfahren nach einem der vorangehenden Ansprüche, bei dem der Eckbereich (E1x) ausgehend von dem Eckbildpunkt (x0) wenigstens einen in horizontaler Richtung des Bildblockes (x) benachbart zu dem Eckbildpunkt angeordneten Bildpunkt (x1) und wenigstens einen in vertikaler Richtung des Bildblockes (x) benachbart zu dem Eckbildpunkt (x0) angeordneten Bildpunkt (x4) umfasst.

8. Verfahren nach einem der vorangehenden Ansprüche, bei dem zu allen Ecken des einen Bildblockes (x) Eckbereiche (E1x, E2x, E3x, E4x) definiert werden und bei dem die Verfahrensschritte A) bis D) für jeden dieser Eckbereiche (E1x, E2x, E3x, E4x) durchgeführt werden.

9. Verfahren nach Anspruch 8, bei dem die einzelnen Eckbereiche (E1x, E2x, E3x, E4x) so definiert sind, dass die Eckbereiche benachbarter Ecken aneinander angrenzen.

10. Verfahren nach einem der vorangehenden Ansprüche, das folgende weitere Verfahrensschritte umfasst:

    F) Definieren eines in der Mitte des einen (x) Bildblocks angeordneten Mittenbereiches (Mx),
    G) Ermitteln, ob die Bewegungsvektoren von wenigstens fünf der zu dem einen Bildblock (x) benachbarten Bildblöcke (a-g) ein homogenes Vektorfeld bilden,
    H) Erzeugen eines Bewegungsvektors zu dem Mittenbereich (Mx) aus den Bewegungsvektoren der wenigstens fünf benachbarten Bildblöcke, wenn die Bewegungsvektoren dieser wenigstens fünf benachbarten Bildblöcke ein homogenes Vektorfeld bilden.

11. Verfahren nach einem der vorangehenden Ansprüche, bei dem das Vorliegen eines homogenen Vektorfeldes angenommen wird, wenn die Beträge von Differenzvektoren, die aus der Vektordifferenz der Bewegungsvektoren der benachbarten Bildblöcke gebildet sind, kleiner als ein vorgegebener Schwellenwert sind.

7

**12.** Verfahren nach einem der vorangehenden Ansprüche, bei dem die einzelnen Bildblöcke vier Bildpunkte in horizontaler Richtung und vier Bildpunkte in vertikaler Richtung umfassen.

**Claims**

**1.** A method of determining motion vectors that are assigned to individual image regions (E1x, E2x, E3x, E4x) of an image (P), whereby the image (P) is subdivided into a number of rectangular image blocks (a-d, x, e-h), and a motion vector is assigned to each image block (a-d, x, eh), the method comprising the following method steps:

A) defining a corner region (E1x) disposed in a corner of one (x) of the image blocks (a-d, x, e-h);
B) determining the image blocks (a, b, d) adjacent to this corner region (E1x);
C) determining whether the motion vectors assigned to these adjacent image blocks (a, b, d) form a homogeneous vector field;
D) generating a motion vector for the corner region (E1x) from the motion vectors of the adjacent image blocks (a, b, d) when the motion vectors of the adjacent image blocks form a homogeneous vector field.

**2.** A method according to Claim 1, comprising the following further method step:

E) defining the motion vector of the selected one of the image blocks (x) as the motion vector for the corner region when the motion vectors of the adjacent image blocks do not form a homogeneous vector field.

**3.** A method according to one of Claims 1 or 2, in which the generation of a motion vector for the corner region (E1x) comprises averaging the motion vectors of the adjacent image blocks.

**4.** A method according to Claim 3, in which the motion vectors of the adjacent image blocks (a, b, d) are weighted equally during averaging.

**5.** A method according to Claim 3, in which the motion vector of the one (a) of the adjacent image blocks that is adjacent at only one corner to the corner region (E1x) is weighted more strongly during averaging than the motion vectors of the other image blocks (b, d) adjacent to the corner region (E1x).

**6.** A method according to one of the preceding Claims, in which the corner region (E1x) comprises a corner pixel (x0) disposed in the corner of the one image block (x).

**7.** A method according to one of the preceding Claims, in which starting from the corner pixel (x0) the corner region (E1x) comprises at least one pixel (x1) disposed in the horizontal direction of the image block (x) adjacent to the corner pixel, and at least one pixel (x4) disposed in the vertical direction of the image block (x) adjacent to the corner pixel (x0).

**8.** A method according to one of the preceding Claims, in which for all corners of the one image block (x) corner regions (E1x, E2x, E3x, E4x) are defined and with which method steps A) to D) are performed for each of these corner regions (E1x, E2x, E3x, E4x).

**9.** A method according to Claim 8, in which the individual corner regions (E1x, E2x, E3x, E4x) are defined so that the corner regions of adjacent corners adjoin one other.

**10.** A method according to one of the preceding Claims, comprising the following further method steps:

F) defining a centre region (Mx) disposed in the centre of the one (x) image block,
G) determining whether the motion vectors of at least five of the image blocks (a-g) adjacent to the one image block (x) form a homogeneous vector field,
H) generating a motion vector for the centre region (Mx) from the motion vectors of the at least five adjacent image blocks when the motion vectors of these at least five adjacent image blocks form a homogeneous vector field.

**11.** A method according to one of the preceding Claims, in which the presence of a homogeneous vector field is assumed when the values of the difference vectors that are formed from the vector differences of the motion vectors of the adjacent image blocks are smaller than a predetermined threshold value.

**12.** A method according to one of the preceding Claims, in which the individual image blocks comprise four pixels horizontally and four pixels vertically.

## Revendications

**1.** Procédé de détermination de vecteurs de mouvement attribués à diverses régions (E1x, E2x, E3x, E4x) d'une image (P), l'image (P) étant divisée en un certain nombre de blocs rectangulaires (a-d, x, e-h) auxquels est respectivement attribué un vecteur de mouvement, le procédé comprenant les étapes suivantes consistant à :

A) définir une région de coin (E1x) située dans un coin d'un (x) des blocs (a-d, x, e-h),
B) déterminer les blocs (a, b, d) voisins de cette région de coin (E1x),
C) déterminer si les vecteurs de mouvement attribués à ces blocs voisins (a, b, d) forment un champ vectoriel homogène,
D) produire un vecteur de mouvement pour la région de coin (E1x) à partir des vecteurs de mouvement des blocs voisins (a, b, d), lorsque les vecteurs de mouvement des blocs voisins forment un champ vectoriel homogène.

**2.** Procédé selon la revendication 1, présentant l'étape supplémentaire suivante consistant à :

E) définir le vecteur de mouvement de l'un des blocs (x) comme vecteur de mouvement pour la région de coin lorsque les vecteurs de mouvement des blocs voisins ne forment pas de champ vectoriel homogène.

**3.** Procédé selon l'une des revendications 1 ou 2, dans lequel la production d'un vecteur de mouvement pour la région de coin (E1x) comprend le calcul de la moyenne des vecteurs de mouvement des blocs voisins.

**4.** Procédé selon la revendication 3, selon lequel on pondère les vecteurs de mouvement des blocs voisins (a, b, d) de manière égale, lors du calcul de la moyenne.

**5.** Procédé selon la revendication 3, dans lequel, lors du calcul de la moyenne, le vecteur de mouvement de l'un (a) des blocs voisins qui est en contact avec la région de coin (E1x) par un seul coin est plus fortement pondéré que les vecteurs de mouvement des autres blocs (b, d) voisins de la région de coin (E1x).

**6.** Procédé selon l'une des revendications précédentes, dans lequel la région de coin (E1x) comprend un pixel de coin (x0) situé dans le coin du bloc (x).

**7.** Procédé selon l'une des revendications précédentes, selon lequel la région de coin (E1x) comprend, en partant du pixel de coin (x0), au moins un pixel (x1) voisin du pixel de coin dans une direction horizontale par rapport au bloc (x) et au moins un pixel (x4) voisin du pixel de coin (x0) dans une direction verticale par rapport au bloc (x).

**8.** Procédé selon l'une des revendications précédentes, selon lequel des régions de coin (E lx, E2x, E3x, E4x) sont définies pour chaque coin du bloc (x), et on conduit les étapes A) à D) pour chacune de ces régions de coin (E1x, E2x, E3x, E4x).

**9.** Procédé selon la revendication 8, dans lequel les diverses régions de coin (E1x, E2x, E3x, E4x) sont définies de telle manière que les régions de coins voisins soient contiguës.

**10.** Procédé selon l'une des revendications précédentes, comprenant les étapes supplémentaires suivantes consistant à :

F) définir une zone centrale (Mx) située au centre du bloc (x),
G) déterminer si les vecteurs de mouvement d'au moins cinq des blocs (a-g) voisins du bloc (x) forment un champ vectoriel homogène,
H) produire un vecteur de mouvement pour la zone centrale (Mx) à partir des vecteurs de mouvement des au moins cinq blocs voisins, lorsque les vecteurs de mouvement de ces au moins cinq blocs voisins forment un champ vectoriel homogène.

**11.** Procédé selon l'une des revendications précédentes, selon lequel on considère qu'il existe un champ vectoriel homogène lorsque les valeurs absolues de vecteurs différentiels formés par la différence entre les vecteurs de mouvement des blocs voisins sont inférieures à une valeur de seuil prédéterminée.

**12.** Procédé selon l'une des revendications précédentes, selon lequel les divers blocs comprennent quatre pixels dans la direction horizontale et quatre pixels dans la direction verticale.

## FIG 1

# FIG 2a

# FIG 2b

# FIG 2c

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5148269 A
- US 5790207 A
- EP 0466981 A
- US 5557341 A

**In der Beschreibung aufgeführte Nicht-Patentliteratur**

- **SCHRÖDER, H. ; BLUME, H.** *Mehrdimensionale Signalverarbeitung,* vol. 2, 259-266